Europäisches Patentamt

European Patent Office

Office européen des brevets

(19)

(11) Numéro de publication: **0 153 219**
**A 1**

# (12) DEMANDE DE BREVET EUROPEEN

(21) Numéro de dépôt: 85400197.1

(22) Date de dépôt: 06.02.85

(51) Int. Cl.⁴: **H 01 J 29/89, H 04 N 5/72**

(30) Priorité: 20.02.84 FR 8402640
17.08.84 FR 8413004

(43) Date de publication de la demande: 28.08.85
Bulletin 85/35

(84) Etats contractants désignés: **AT BE CH DE GB IT LI LU NL SE**

(71) Demandeur: **Fourny, Denise Gisele Josette, 19, Boulevard de Suisse, Monte Carlo (MC)**

(72) Inventeur: **Fourny, Denise Gisele Josette, 19, Boulevard de Suisse, Monte Carlo (MC)**

(74) Mandataire: **Hautier, Jean-Louis, OFFICE MEDITERRANEEN DE BREVETS D'INVENTION 24 rue Masséna, F-06000 Nice (FR)**

(54) **Filtre tissé, monté sur un enrouleur automatique, faisant office de tamis destiné à être placé devant un écran cathodique, composé de monofibres formant des micromailles comportant, sur une face, un film translucide.**

(57) L'invention a pour objet un filtre faisant office de grille ou de tamis monté sur un enrouleur automatique et destiné à être placé devant un écran cathodique et le dispositif pour la mise en place dudit filtre.

Le filtre comporte un enrouleur automatique (2), des moyens de fixation dudit enrouleur sur le téléviseur (3), des moyens de guidage et de maintien (9) du filtre (1), des moyens de fixation (7B) du filtre (1) soit à son extrémité, soit sur ses côtés.

Le filtre s'applique aux écrans cathodiques.

ACTORUM AG

L'invention a pour objet un perfectionnement au filtre tissé, monté sur un enrouleur automatique, faisant office de tamis destiné à être placé devant un écran cathodique, composé de monofibres formant des micromailles et comportant, sur une face un film translucide.

Les écrans cathodiques sont de plus en plus utilisés dans la vie professionnelle ou domestique (microprocesseurs, téléviseurs, écrans de contrôle ...). Ces écrans comportent de nombreux défauts. Ces défauts sont notamment les suivants :

- la linéarité sous-jacente de l'image,
- les vibrations de textes,
- les réverbérations de lumières électriques incidentes,
- l'effet miroir en plein jour,
- les nombreux reflets d'ordre divers,
- la dureté des couleurs et des blancs qui, quel que soit le réglage, sont pour le moins gênants, parfois insupportables et occasionnent un stress et une fatigue supplémentaire d'ordre visuel ou autre.

Les réverbérations de lumières incidentes importunes sur l'écran d'un récepteur de télévision sont tellement entrées dans les moeurs (mauvaises) comme d'ailleurs faisaient partie de la norme, les parasites auditifs aux débuts de la "Transmission Sans Fil", qu'un des grands contructeurs internationaux utilise dans son catalogue des dessins (et non des photos) publicitaires qui reproduisent des écrans de téléviseurs avec une grande réverbération non requise.

Le filtre lisse polarisant connu, en matériau usuel, placé près de l'écran n'est pas efficace et pose un problème de réflexion autonome. En effet, un filtre de cette espèce est porté en général près de l'iris qu'il soit humain (lunettes) ou non (filtres pour caméra, prise de vue...), la distance entre l'oeil et le filtre est donc courte et les reflets ou autres "défauts" repris ci-dessus sont presqu'inexistants.

L'invention tend à éviter tous ces problèmes de réverbération.

Il est impensable que tous les utilisateurs d'écrans cathodiques portent des lunettes spéciales, de plus adaptées à leur propre vue, pour améliorer la réception de l'image et du texte.

Le filtre, à la source, c'est-à-dire sur l'écran lui-même, est donc bien indispensable.

Les pupitreurs en salles et les utilisateurs de terminaux informatiques qui passent de longs moments à fixer les écrans et à déchiffrer des textes ou des plans, souffrent fort des "défauts" décrits ci-dessus et furent donc les premiers "demandeurs" d'une solution de correction.

On utilise donc, actuellement, des filtres tissés à micromailles, par exemple en polyamide noir. Ces filtres, qui font office de grille ou de tamis, sont donc composés d'un cadre qui maintient tendu un panneau tissé de micromailles. Ledit filtre comporte des moyens de fixation qui permettent de le fixer juste devant l'écran.

Si le filtre lui-même résoud les problèmes propres à l'écran, il crée des inconvénients du fait de son cadre et de sa mise en place. Le filtre n'est pas protégé quand il n'est pas utilisé; il accumule peu à peu dans ses micromailles des particules de poussière, il faut retirer le cadre pour accéder à l'écran, par exemple pour le nettoyer. Le cadre est rigide ainsi que les moyens de fixation, il n'est donc pas toujours possible que le filtre soit toujours à la même distance de l'écran et ce, du fait de la forme de l'écran qui n'est pas plane mais bombée.

L'état de la technique peut être défini par les brevets suivants : US-A-2 668 586, GB-A-2 067 380 ces brevets décrivent, l'un un rideau de décoration qui doit être disposé devant l'écran cathodique afin de le cacher lorsqu'il n'est pas en marche, l'autre un écran antiréflection qui n'est pas enroulable mais fixe. De nombreux brevets décrivent des rideaux pour fenêtre de caravanes, des écrans de protection rigides pour oscilloscopes ou des écran permettant un grossissement de l'image.

Le filtre selon l'invention tend à éviter tous ces inconvénients.

Le dispositif selon l'invention permet au filtre d'être, lui-même, protégé, il facilite l'installation et l'entretien dudit filtre et de l'écran.

Le filtre selon l'invention est composé d'une feuille en matière flexible telle qu'un panneau tissé de micromailles. Cette feuille en matière flexible est disposée dans un enrouleur automatique comme ceux utilisés comme store pare-soleil pour véhicules automobiles. Des moyens faisant office de guides permettent au filtre d'être bien près de l'écran et d'épouser sa forme. Lesdits guides peuvent être un jeu de barres horizontales réglables en hauteur car elles sont montées coulissantes sur deux barres verticales disposées de part et d'autre de l'écran.

Ces barres verticales peuvent ne pas être droites, mais elles peuvent être légèrement incurvées ou cintrées de manière à épouser la courbe de l'écran pour que la distance entre l'écran et le filtre soit la plus proche possible et constante.

Au niveau de l'arbre de l'enrouleur automatique sont disposés des moyens d'accrochage de l'enrouleur sur le téléviseur, des moyens de réglage permettent d'adapter dans les meilleures conditions le filtre à l'écran.

Selon une autre mode de réalisation le dispositif est composé de deux pièces en forme de L. La base du L comporte un moyen de fixation sur le poste. Ce moyen peut être une attache rapide qui vient en contact avec une attache rapide collée sur ledit poste. La partie verticale du L, qui est contre la base du L, comporte une ouverture qui permet d'introduire une des pattes de l'enrouleur automatique qui conrrespond à cette forme d'ouverture. La patte de l'enrouleur automatique peut coulisser sur toute la longueur de la partie verticale du L dans une glissière prévue à cet effet. Le long de cette glissière, sur la partie extérieure, il est prévu un marquage gradué en centimètres en chiffre sur chaque face d'un côté.

Selon un autre mode de réalisation selon l'invention, l'enrouleur automatique qui contient le filtre qui va venir devant l'écran cathodique est intégré dans le chassis du poste.

Selon un autre perfectionnement de l'invention, un moyen de blocage permet de bloquer la rotation de l'axe de l'enrouleur automatique.

Le filtre selon l'invention est une feuille en matière flexible. Ces filtres tissés en monofibres, par exemple en polyamide noir, d'environ 7/100e de millimètre de diamètre ont généralement des mailles d'environ 110 à 125 microns (près de 8 millions pour un tube cathodique de 66 cm de diagonale).

Il est prouvé que pour une surface utile d'ouvertures constantes une trame plus petite, par exemple de 80 microns est encore plus opérante. Dans ces conditions, il ne faut utiliser que des monofibres . Ces monofibres peuvent être encore plus fines de manière à maintenir cette surface utile d'ouvertures.

Ce matériau en feuille qui forme ledit filtre, est délicat et est difficilement maniable à la production.

L'inventeur a donc voulu éviter ces inconvénients.

L'inventeur a donc disposé contre une des faces du filtre, un film translucide. Ledit film translucide peut par exemple être un film ou une feuille en plastique translucide . Ce film est légèrement translucide, il est presque transparent.

Ce film plastique peut être rigide, semi rigide, ou souple et le "tissu micromaille" peut y être soudé à chaud par laminage, calandré ou simplement appliqué et tenu par des attaches.

**Ce film plastique a deux fonctions :**

1) Une fonction mécanique,

2) Une fonction optique.

Ce film plastique facilite la manipulation du filtre qui a plus de tenue et il améliore les qualités optiques.

Ainsi, par son orientation moléculaire, il fait office de correcteur. Il évite les franges d'interférence non désirées (moirures).

Le matériau translucide peut, choisi de manière adéquate, diminuer trés

largement l'effet polariseur-analyseur qui se crée entre le tube cathodique et le filtre tamis.

Le filtre est placé devant l'écran cathodique, avec sa face comportant le film plastique translucide du côté de l'écran, la face tissée, sans film plastique translucide, est disposée vers l'utilisateur.

Les dessins ci-joints représentent à titres d'exemples indicatifs et non limitatifs des modes de réalisation préférés selon l'invention; ils permettront de comprendre aisément l'invention.

La figure 1 est une vue en perspective de l'écran et du filtre mis en place devant l'écran.

La figure 2 est également une vue en perspective de l'écran, du filtre et des moyens de guidage du filtre.

la figure 3 est une vue en coupe de l'écran et de son filtre, vu de côté.

La figure 4 est une vue en coupe de l'écran, de son filtre et des moyens de guidage du filtre, vu de côté ainsi qu'une vue de détail de la fixation de la partie inférieure du filtre au moyen d'attaches rapides.

La figure 5 est une vue de côté, des pièces vues en éclaté d'une extrémité de l'enrouleur automatique du filtre.

La figure 6 est une vue en perspective vue de côté d'une extrémité de l'enrouleur automatique, mettant en évidence les moyens de fixation sur l'écran et les moyens de réglage de la distance entre le filtre et l'écran.

La figure 7 est une vue en coupe de l'écran et du filtre dont l'enrouleur automatique n'est pas posé mais suspendu devant l'écran.

La figure 8 est une vue en coupe du dispositif mis en place devant l'écran de télévision.

La figure 9 est une vue en perspective vue de face du dispositif et de l'enrouleur automatique.

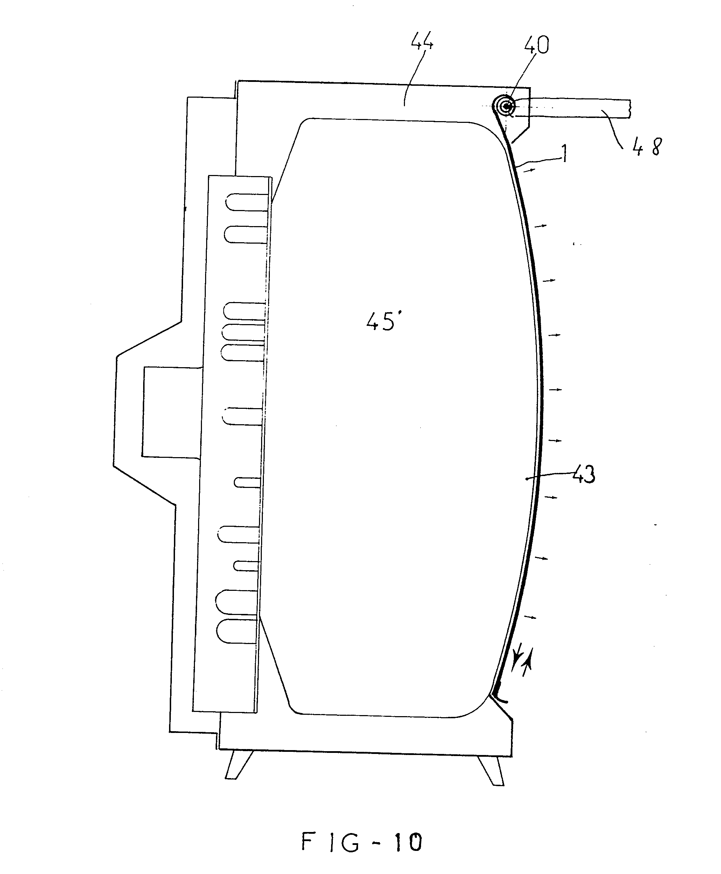

La figure 10 est une vue en coupe d'un appareil comportant un filtre intégré.

La figure 11 est une vue schématique du filtre selon l'invention vu en coupe.

La figure 12 est une vue schématique du filtre selon l'invention vu en coupe et en place sur un écran cathodique.

La figure 13 est une vue schématique du filtre selon l'invention vu en perspective, mis en place sur un écran cathodique et déroulé d'un enrouleur automatique.

La figure 14 est une vue schématique du filtre selon l'invention vu en coupe et mis en place sur un écran cathodique 51 et déroulé d'un enrouleur automatique.

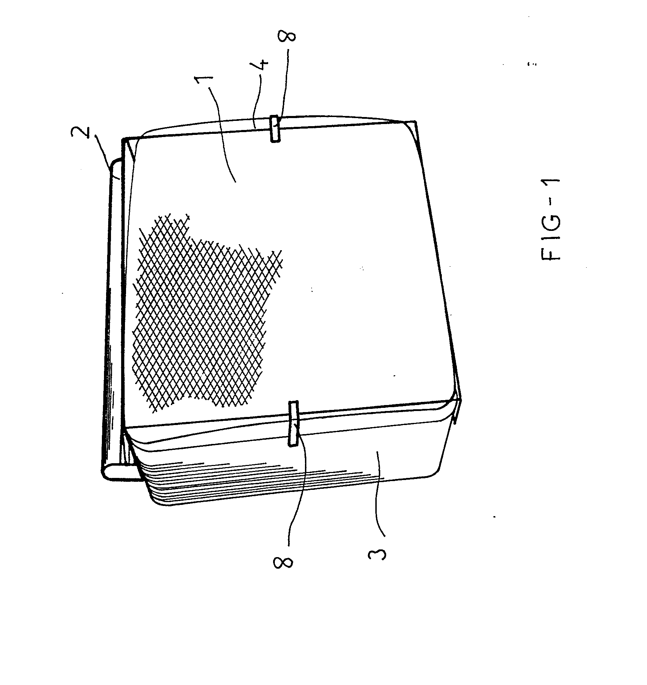

Le filtre 1 selon l'invention est disposé dans un enrouleur automatique 2 qui est disposé sur un des côtés du téléviseur 3 ou autre élément recevant l'écran cathodique 4. Dans le mode de réalisation représenté dans la figure 1, le filtre 1 est déroulé de son enrouleur 2 pour venir devant l'écran 4. Des moyens de fixation 5 tels que des attaches rapides 7A, 7B permettent de fixer le filtre 1 à son extrémité 6. A cet effet, des pastilles d'accrochage 7A sont collées sur le téléviseur 3. L'extrémité 6 du filtre 1 comporte des pastilles d'accrochage rapides 7B qui viennent en regard et correspondent aux pastilles 7A. Le filtre 1 peut ainsi être disposé devant l'écran.

Dans la figure 1, sont représentées des attaches latérales 8 qui assurent une meilleure application du filtre 1 devant l'écran. Ces attaches latérales 8 peuvent également être des attaches rapides.

Bien entendu, l'enrouleur 2, selon le mode de réalisation représenté dans les figures, est placé au-dessus du téléviseur ; on peut aisément envisager que l'enrouleur soit placé en dessous ou sur un des côtés du téléviseur.

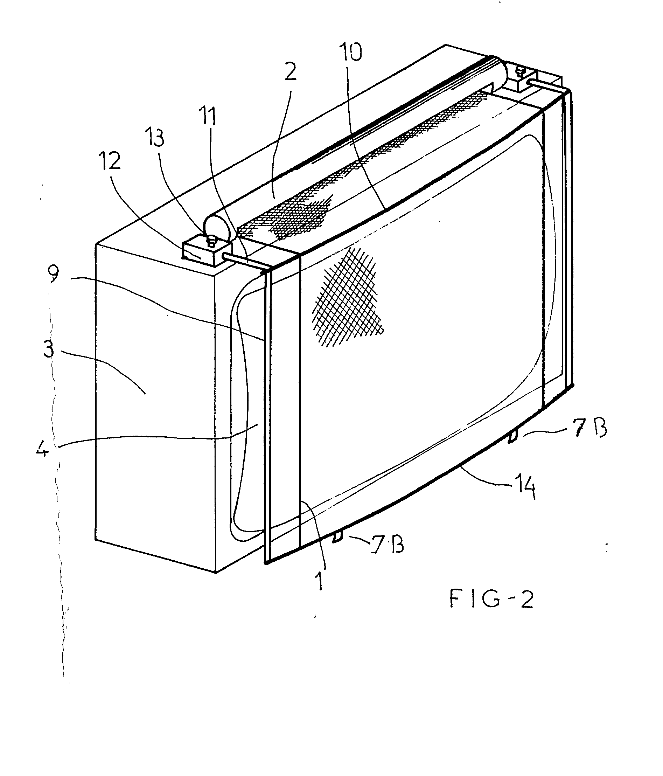

Dans les figures 1, 2, 3, 4, 5, 6, on peut distinguer que le filtre 1 est parfaitement disposé par rapport à l'écran 4, des moyens de guidage 9, 11, tels que des barres horizontales 11 et des barres verticales 9 permettent de régler et de guider la position du filtre 1 par rapport à l'écran 4.

Les barres horizontales 11 s'engagent dans des blocs 12 prévus à cet effet, qui sont intégrés ou indépendants de l'enrouleur 2. Ces barres horizontales 11 peuvent, plus ou moins, s'enfoncer dans les blocs 12 ; la longueur de celles-ci, une fois réglées, peut être fixée par des vis de blocage 13. Ces barres horizontales 11 permettent de régler la distance du filtre 1 par rapport à l'écran 4.

Les barres verticales 9 peuvent être reliées entre elles par des barres horizontales 10 et 14 qui assurent une bonne position du filtre.

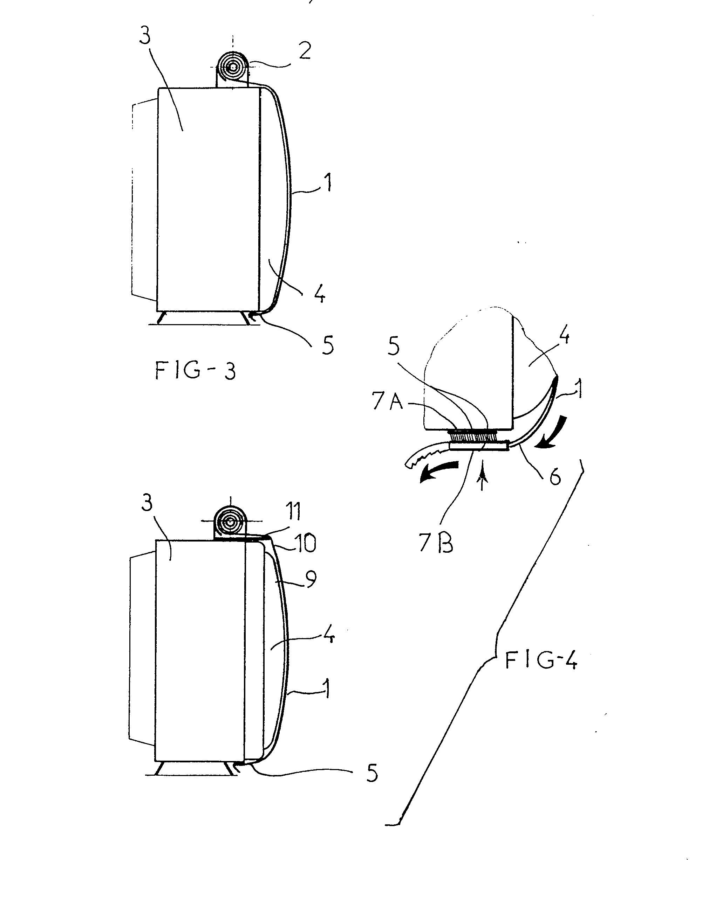

Dans l'exemple représenté dans la figure 4, les barres verticales 9 sont cintrées de manière à épouser la forme de l'écran 4 pour que la distance du filtre 1, par rapport à l'écran 4, soit identique partout.

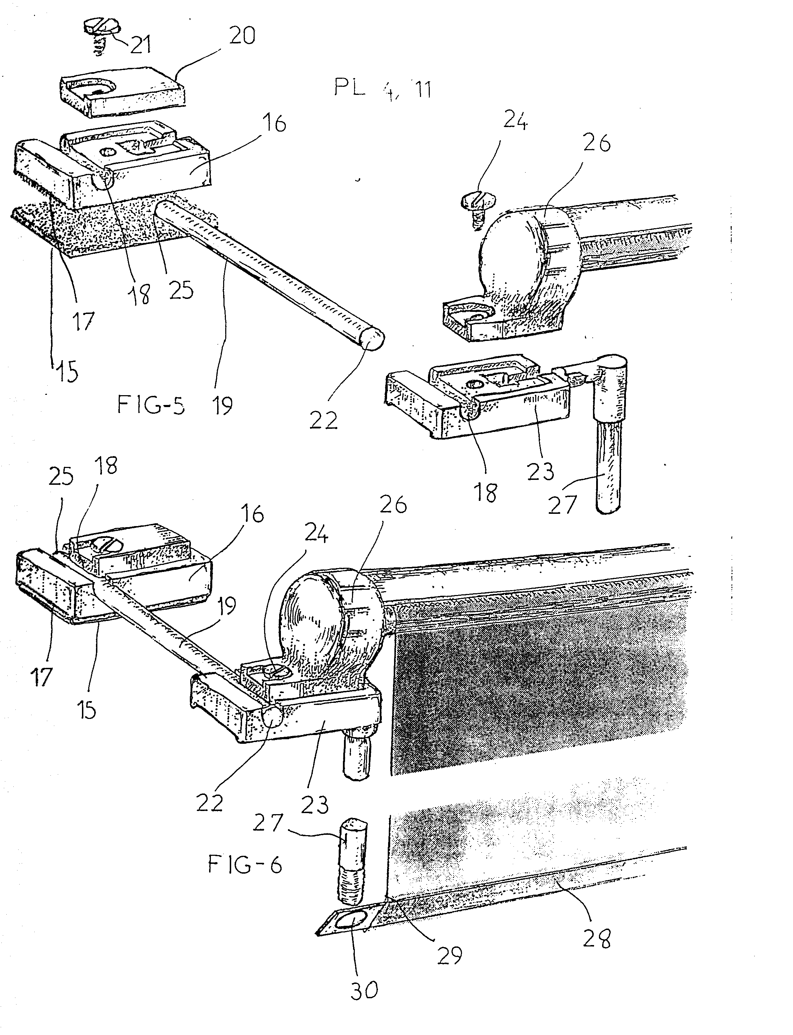

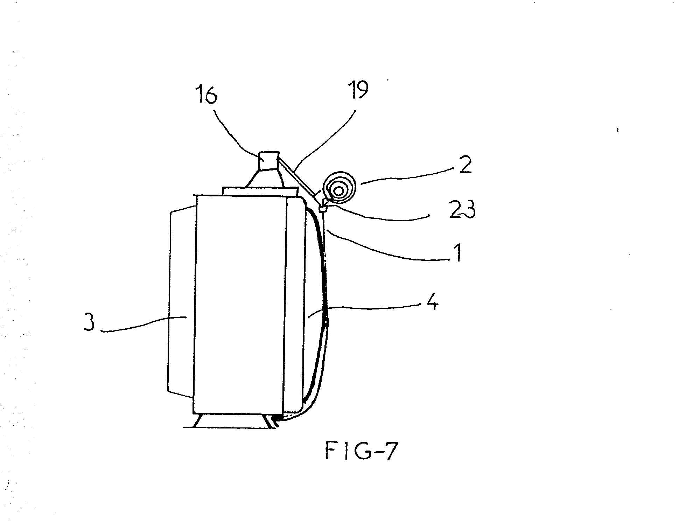

Les figures 5, 6, 7 représentent des vues en détail des moyens de fixation de l'enrouleur qui n'est plus posé sur l'écran mais suspendu devant la partie la plus haute (ou la plus basse de l'écran), ainsi que les moyens de guidage et de réglage du filtre 1.

Une attache rapide auto-collante 15 est disposée sur le dessus du téléviseur 3, en regard un plot 16 vient également se fixer par une attache rapide 17.

Ce plot 16 comporte un logement 18 pour l'extrémité 25 de la barre de soutien 19. Cette barre de soutien 19 peut coulisser dans le logement 18 de manière à pouvoir régler la distance de séparation entre le filtre et l'écran 4. Une pièce d'arrêt 20 et une vis de blocage 21 peuvent venir maintenir et bloquer la barre de soutien 19.

A l'autre extrémité 22 de la barre de soutien 19, un plot 23, analogue au plot 16, peut venir se fixer. A la place de la pièce d'arrêt, on peut disposer une extrémité 26 de l'enrouleur automatique 2, qui est maintenue en place par une vis de blocage 24.

Sur le plot 23, est fixée une barre verticale 27 qui permet de guider le filtre 1 et de le maintenir bien tendu devant l'écran 4 du téléviseur 3. Cette barre verticale 27 peut venir dans un trou 30 de la baguette horizontale 28 disposée dans l'ourlet 29 du filtre 1.

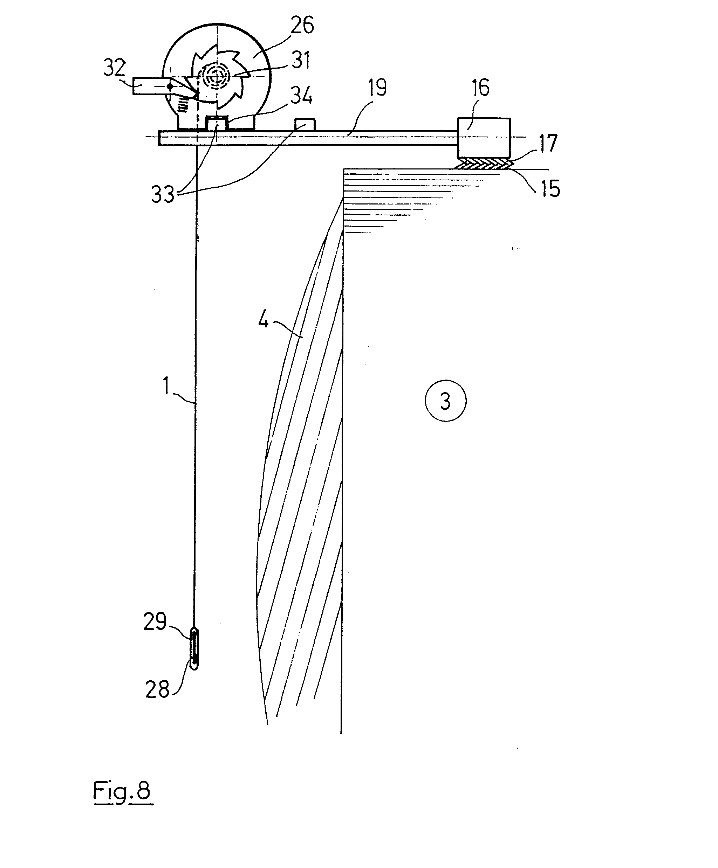

Selon le mode de réalisation représenté dans la figure 8, le filtre 1 lorsqu'il est déroulé, pend verticalement devant l'écran 4 du téléviseur 3 tendu par un poids suffisant de la barre 28 dans l'ourlet 29 et à bonne distance de l'écran 4 par le positionnement de l'enrouleur 2 sur les barres de soutien 19 qui possèdent des taquets 33 qui s'encastrent dans une cavité adéquate 34 de l'extrémité 26, les barres de soutien 19 faisant partie intégrante ou non des plots 16 attachés au téléviseur 3 par les attaches rapides 17, 15 collées l'une au téléviseur 3, l'autre au plot 16, la hauteur de déroulement du filtre 1 étant réglée par l'arrêt, en opposition au ressort de l'enrouleur 2 provoqué par une roue à cliquet 31 et son levier de blocage 32.

Selon un autre mode de réalisation le dispositif de mise en place du filtre devant l'écran est composé de deux pièces 35 et 36 en forme de L. La base 36 du L comporte un moyen de fixation 37 sur le poste. Ce moyen peut être une attache rapide 37 qui vient en contact avec une attache rapide collée sur ledit poste 45. La partie verticale 35 du L qui est contre la base 36 du L comporte une ouverture 38 qui permet d'introduire une des pattes 39 de l'enrouleur automatique 40 qui correspond à cette forme d'ouverture 38. La patte 39 de l'enrouleur automatique 40 peut coulisser sur toute la longueur de la partie verticale du L dans une glissière 41 prévue à cet effet. Le long de cette glissière 41, sur la partie extérieure, il est prévu un marquage 42 gradué en centimètres en chiffres sur chaque face d'un côté.

Selon un autre mode de réalisation selon l'invention, l'enrouleur automatique 40, qui contient le filtre 1 qui va venir devant l'écran cathodique 43, est intégré dans le chassis 44 du poste 45.

L'axe 40 peut être prolongé par une pièce 46 en forme d'étrier. Cet étrier 46 comporte un axe 47 perpendiculaire à l'axe 40. Sur cet axe 47, est monté une manette 48. La manette 48 montée, sur son axe 47 ,peut donc être disposée soit selon l'axe longitudinal de l'axe 40 de l'enrouleur automatique, soit perpendiculairement audit axe 40. Dans ce dernier cas, la manette 48 fait office de moyen de blocage. En effet, la manette 48 vient buter contre le cadre , le chassis ou le premier obstacle, empêchant ainsi l'axe 40 de l'enrouleur automatique de tourner.

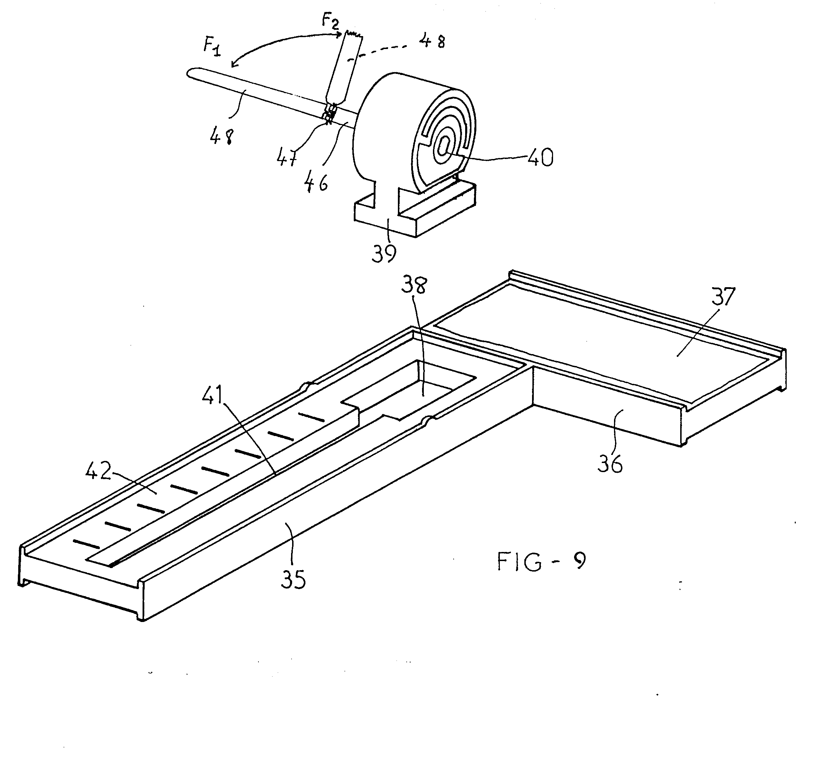

Pour débloquer l'enrouleur, il suffit de remettre la manette 48 dans le prolongement de l'axe 40, comme représenté par les flèches F1 et F2 de la figure 9.

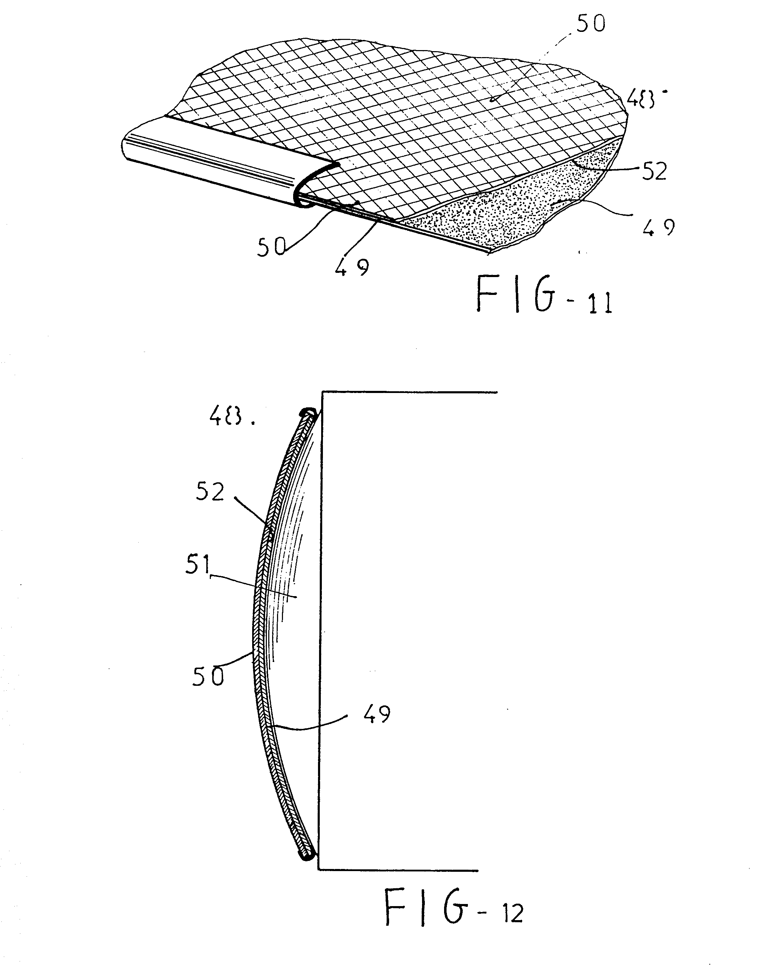

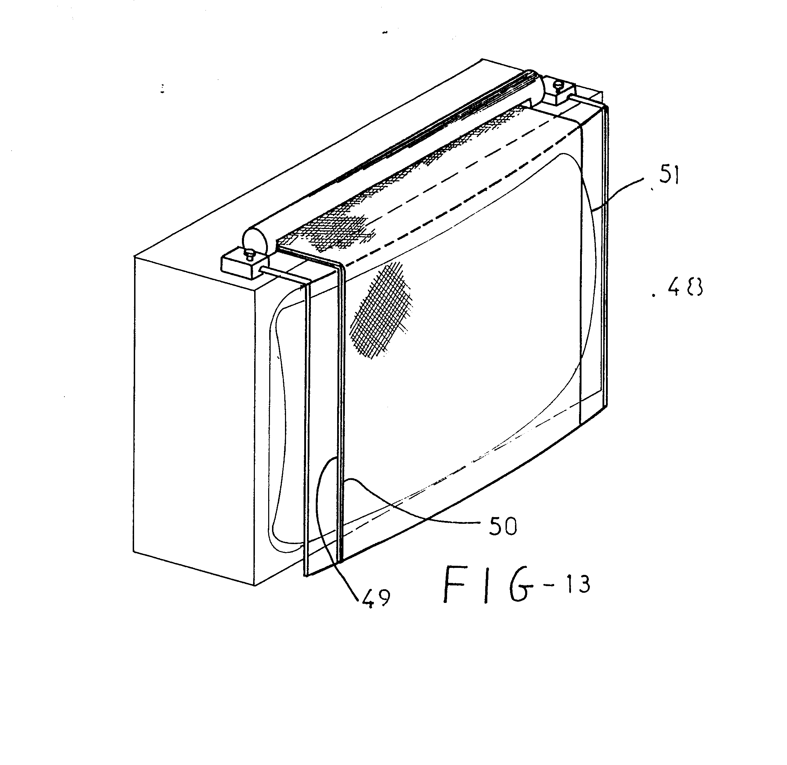

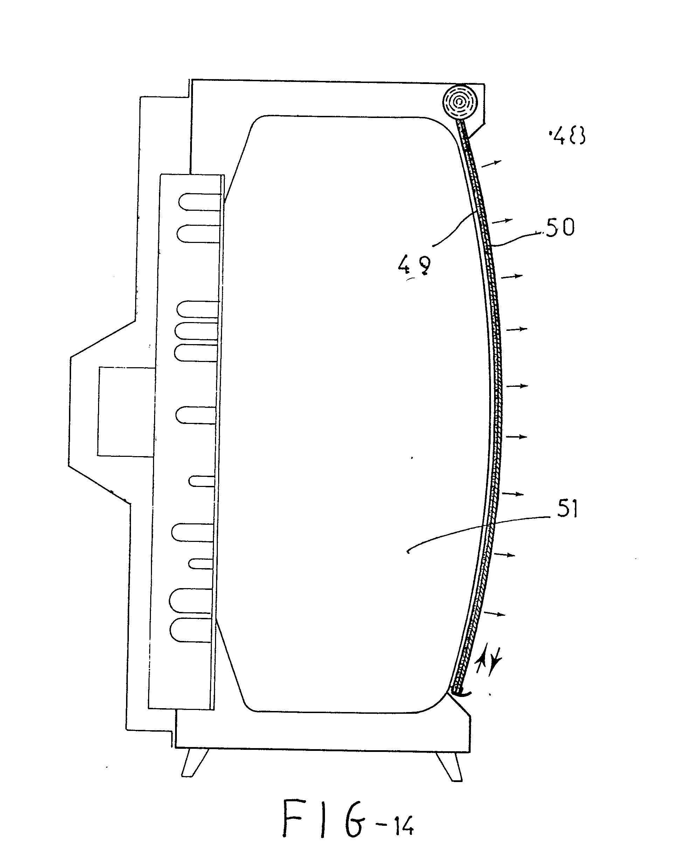

Contre une des faces du filtre 1 est disposé un film 49 translucide. Ledit film 49 translucide peut par exemple être un film 49 ou une feuille en plastique translucide (voir les figures 11, 12 et 13).

Ce film 49 plastique peut être rigide, semi rigide, ou souple et le "tissu micromaille" 50 peut y être soudé à chaud par laminage, calandré ou simplement appliqué et tenu par des attaches.

**Ce film 2 plastique a deux fonctions :**

1) Une fonction mécanique,

2) Une fonction optique .

Ce film 49 plastique facilite la manipulation du filtre 48 qui a plus de tenue et il améliore les qualités optiques.

Ainsi, par son orientation moléculaire, il fait office de correcteur. Il évite les interférences non désirées (moirures sous forme de franges,croix et autres cercles). Le matériau translucide peut, choisi de manière adéquate, diminuer trés largement l'effet polariseur-analyseur qui se crée entre le tube cathodique et le filtre 1 tamis.

Le filtre 48 est placé devant l'écran cathodique, avec sa face comportant le film 49 plastique translucide du côté de l'écran, l'autre face tissée 50, sans film 49 plastique translucide, est disposée vers l'utilisateur.

REVENDICATIONS

1. Filtre pour écran cathodique, amovible automatiquement, composé d'une feuille en matière textile tissée de micromailles disposé devant l'écran cathodique, lorsqu'il est allumé, pour éviter notamment les problèmes de réverbération caractérisé par le fait qu'entre la face (52) du tissu micromailles (50) et l'écran cathodique (51), doit être intercalé un film translucide (49).

2. Filtre tissé faisant office de tamis destiné à être placé devant un écran cathodique, composé de monofibres formant des micromailles selon la revendication 1 caractérisé par le fait que le film (49) est légèrement translucide.

3. Filtre tissé faisant office de tamis destiné à être placé devant un écran cathodique, composé de monofibres formant des micromailles selon l'une quelconque des revendications 1 ou 2 caractérisé par le fait que ledit film, légèrement translucide, est en plastique.

4. Filtre tissé faisant office de tamis destiné à être placé devant un écran cathodique, composé de monofibres formant des micromailles selon l'une quelconque des revendications 1, 2 ou 3 caractérisé par le fait que le film (49) est semi-rigide.

5. Filtre tissé faisant office de tamis destiné à être placé devant un écran cathodique, composé de monofibres formant des micromailles selon l'une quelconque des revendications 1, 2 ou 3 caractérisé par le fait que le film (49) est rigide.

6. Filtre tissé faisant office de tamis destiné à être placé devant un écran cathodique, composé de monofibres formant des micromailles selon l'une quelconque des revendications 1, 2, ou 3 caractérisé par le fait que le film (49) est souple.

7. Filtre tissé faisant office de tamis destiné à être placé devant un écran cathodique, composé de monofibres formant des micromailles selon l'une quelconque des revendications 1, 2, 3, 4, 5 ou 6 caractérisé par le fait que le film (49) est soudé à chaud par laminage.

8. Filtre tissé faisant office de tamis destiné à être placé devant un écran cathodique, composé de monofibres formant des micromailles selon l'une quelconque des revendications 1, 2, 3, 4, 5, 6 ou 7 caractérisé par le fait que le film (49) est soudé à chaud par laminage puis calandré.

9. Filtre tissé faisant office de tamis destiné à être placé devant un écran cathodique, composé de monofibres formant des micromailles selon l'une quelconque des revendications 1, 2, 3, 4, 5, 6, 7 ou 8 caractérisé par le fait que ce film plastique (49) a deux fonctions :

1) une fonction mécanique,

2) une fonction optique ;

ce film plastique (49) facilite la manipulation du filtre (48) qui a plus de tenue et il améliore les qualités optiques ; ainsi, par son orientation moléculaire, il fait office de correcteur ; il évite les franges d'interférence non désirées ( moirures).

10. Filtre tissé faisant office de tamis destiné à être placé devant un écran cathodique, composé de monofibres formant des micromailles selon l'une quelconque des revendications 1, 2, 3, 4, 5, 6, 7, 8 ou 9 caractérisé par le fait que le filtre (48) est placé devant l'écran cathodique (51), avec sa face comportant le film plastique translucide (49) du côté de l'écran, l'autre face tissée (50), sans film plastique translucide (49), est disposée vers l'utilisateur.

11. Dispositif pour la mise en place d'un filtre, amovible automatiquement, devant l' écran cathodique, lorqu'il est allumé composé d'une feuille en matière textile tissée de micromailles selon l'une quelconque des revendications 1, 2, 3, 4, 5, 6, 7, 8, 9 ou 10 caractérisé par le fait qu'il comporte un enrouleur automatique (2), des moyens de fixation (5)(15) dudit enrouleur sur le téléviseur (3), des moyens de guidage et de maintien (8, 9, 27, 28) du filtre (1), des moyens de fixation (7A, 7B, 30) du filtre (1) soit à son extrémité (6) soit sur ses côtés.

12. Dispositif selon l'une quelconque des revendications 1 ou 11, caractérisé par le fait que l'enrouleur automatique (2), qui contient ledit filtre pour écran cathodique, est fixé sur le téléviseur (3) dans sa partie supérieure, inférieure ou latéralement, pour qu'une fois le filtre (1) déroulé, celui-ci vienne bien près devant l'écran (4).

13. Dispositif selon l'une quelconque des revendications 1 ou 11, caractérisé par le fait que l'enrouleur automatique (2) qui contient ledit filtre pour écran cathodique, est suspendu devant l'écran (4) du téléviseur (3) par des barres de soutien (19).

14. Dispositif selon l'une quelconque des revendications 1 ou 11, caractérisé par le fait que les moyens de guidage et de maintien du filtre (1) sont des barres horizontales (11) et des barres verticales (9) permettant de régler et de guider la position du filtre (1) par rapport à l'écran (4).

15. Dispositif selon l'une quelconque des revendications 1 ou 11, caractérisé par le fait que les moyens de fixation (7A, 7B, 30) du filtre (1) à son extrémité (6) sont des attaches rapides (7A, 7B); les pastilles d'accrochage (7A) sont collées sur le téléviseur (3), tandis que l'extrémité (6) du filtre (1) comporte des pastilles d'accrochage rapides (7B) qui viennent en regard et correspondent aux pastilles (7A).

16. Dispositif selon l'une quelconque des revendications 1 ou 11,

caractérisé par le fait qu'il peut comporter des attaches latérales (8) qui sont des attaches rapides.

17. Dispositif selon l'une quelconque des revendications 1 ou 11 caractérisé par le fait qu'il comporte des moyens de guidage (9, 11) tels que des barres horizontales (11) et des barres verticales (9) permettent de régler et de guider la position du filtre (1) par rapport à l'écran (4); les barres horizontales (11) s'engagent dans des blocs (12) prévus à cet effet, qui sont intégrés ou indépendants de l'enrouleur (2), ces barres horizontales (11) peuvent, plus ou moins, s'enfoncer dans les blocs (12); la longueur de celles-ci, une fois réglées, peut être fixée par des vis de blocage (13).

18. Dispositif selon l'une quelconque des revendications 1 ou 11, caractérisé par le fait que les barres verticales (9) peuvent être reliées entre elles par des barres horizontales (10, 14) qui assurent une bonne position du filtre (1).

19. Dispositif selon l'une quelconque des revendications 1 ou 11, caractérisé par le fait que les barres (9) peuvent être cintrées de manière à mieux épouser la forme de l'écran (4).

20. Dispositif selon l'une quelconque des revendications 1 ou 11, caractérisé par le fait qu'une attache rapide auto-collante (15) est disposée sur le dessus du téléviseur (3), en regard un plot (16) vient également se fixer par une attache rapide (17),ce plot (16) comporte un logement (18) pour l'extrémité (25)de la barre de soutien (19); cette barre de soutien (19) peut coulisser dans le logement (18) de manière à pouvoir régler la distance de séparation entre le filtre et l'écran (4), une pièce d'arrêt (20) et une vis de blocage (21) peuvent venir maintenir et bloquer la barre de soutien (19); à l'autre extrémité (22) de la barre de soutien (19), un plot (23), analogue au plot (16), peut venir se fixer; à la place de la pièce d'arrêt, on peut disposer une extrémité (26) de l'enrouleur automatique (2), qui est maintenue en place par une vis de blocage (24); sur le plot (23), est fixée une barre verticale (27) qui permet de guider le filtre (1) et de le maintenir bien tendu devant l'écran (4) du téléviseur (3), cette barre verticale (27) peut venir dans un trou (30) de la baguette horizontale (28) disposée dans l'ourlet (29) du filtre (1).

21. Dispositif selon l'une quelconque des revendications 1 ou 11 caractérisé par le fait que le filtre (1) lorsqu'il est déroulé, pend verticalement devant l'écran (4) du téléviseur (3) tendu par un poids suffisant de la barre (28) dans l'ourlet (29) et à bonne distance de l'écran (4) par le positionnement de l'enrouleur (2) sur les barres de soutien (19) qui possèdent des taquets (33) qui s'encastrent dans une cavité adéquate

0153219

11

(34) de l'extrémité (26), les barres de soutien (19) faisant partie intégrante ou non des plots (16) attachés au téléviseur (3) par les attaches rapides (17,15) collées l'une au téléviseur (3), l'autre au plot (16), la hauteur de déroulement du filtre (1) étant réglée par l'arrêt, en opposition au ressort de l'enrouleur (2) provoqué par une roue à cliquet (31) et son levier de blocage (32).

22. Dispositif de mise en place d'un filtre faisant office de grille ou de tamis monté sur un enrouleur automatique et destiné à être placé devant un écran cathodique selon la revendication 11 caractérisé par le fait que le dispositif est composé de deux pièces (35 et 36) en forme de L ; la base (36) du L comporte un moyen de fixation (37) sur le poste (45) ; ce moyen peut être une attache rapide (37) qui vient en contact avec une attache rapide collée sur ledit poste (45) ; la partie verticale (35) du L qui est contre la base (36) du L comporte une ouverture (38) qui permet d'introduire une des pattes (39) de l'enrouleur automatique (40) qui correspond à cette forme d'ouverture (38) ; la patte (39) de l'enrouleur automatique (40) peut coulisser sur toute la longueur de la partie verticale du L dans une glissière (41) prévue à cet effet ; le long de cette glissière, sur la partie extérieure, il est prévu un marquage (42) gradué en centimètres en chiffre sur chaque face d'un côté.

23. Dispositif selon l'une quelconque des revendications 11 ou 22 caractérisé par le fait que l'enrouleur automatique (40) qui contient le filtre (1) qui va venir devant l'écran cathodique (43) est intégré dans le chassis (44) du poste (45).

24. Dispositif selon l'une quelconque des revendications 11, 22 ou 23 caractérisé par le fait qu'un moyen de blocage (48) permet de bloquer la rotation de l'axe (40) de l'enrouleur automatique.

25. Dispositif selon l'une quelconque des revendications 11 ou 24 caractérisé par le fait que le moyen de blocage (48) est une manette qui est montée sur un étrier (46) qui comporte un axe perpendiculaire à l'axe (40) de l'enrouleur automatique, la manette (48) disposée perpendiculairement à l'axe (40) de l'enrouleur, vient buter contre le premier obstacle empêchant ainsi la rotation dudit axe (40).

FIG - 1

FIG-2

0153219

PL. 3/11

FIG-3

FIG-4

0153219

PL 4, 11

FIG-5

FIG-6

PL. 5/11

FIG-7

0153219

PL. 6/11

Fig.8

FIG - 9

FIG - 10

0153219

PL. 9/11

FIG - 11

FIG - 12

FIG-13

0153219

PL. 11/11

FIG-14

**Office européen des brevets**

**RAPPORT DE RECHERCHE EUROPEENNE**

0153219
Numero de la demande

EP 85 40 0197

## DOCUMENTS CONSIDERES COMME PERTINENTS

| Catégorie | Citation du document avec indication, en cas de besoin. des parties pertinentes | Revendication concernée | CLASSEMENT DE LA DEMANDE (Int Cl.4) |
|---|---|---|---|
| A | FR-A-1 046 375 (GENERAL ELECTRIC) <br> * Page 1, colonne de droite, troisième paragraphe; figure 2 * | 1-5,10 | H 01 J 29/89 <br> H 04 N 5/72 |
| A | US-A-4 246 613 (CHODER et al.) <br> * Colonne 2, en entier; figures 1-3 * | 1-6,9 | |
| A,D | US-A-2 668 586 (J.H. LUCKIE) <br> * Colonne 2, lignes 6-44; figures 1,3 * | 11 | |
| A | DE-B-1 086 742 (SIEMENS) <br> * Colonne 1, lignes 1-16; figure 1 * | 11 | |
| | | | DOMAINES TECHNIQUES RECHERCHES (Int. Cl.4) |
| A | FR-A-1 379 018 (A. TAVERNIER) <br> * Page 1, en entier; figures 1-3 * | 13,14 | H 01 J 29 <br> H 04 N 5 <br> G 02 B 5 |

Le présent rapport de recherche a été établi pour toutes les revendications

| Lieu de la recherche | Date d'achèvement de la recherche | Examinateur |
|---|---|---|
| LA HAYE | 28-05-1985 | WITH F.B. |